# EUROPEAN PATENT APPLICATION

(11) **EP 2 690 917 A1**
(43) Date of publication of application: **29.01.2014**
(21) Application number: 12774349.0
(22) Date of filing: 18.04.2012
(51) Int. Cl.: H04W 72/04

(54) **METHOD, DEVICE, AND TRANSMISSION SYSTEM FOR TRANSMITTING AND RECEIVING DATA BLOCK**

(30) Priority: 18.04.2011 CN 201110096811
(71) Applicant: Huawei Technologies Co., Ltd., Shenzhen, Guangdong 518129 (CN)
(72) Inventor: FANG, Ming, Shenzhen Guangdong 518129 (CN); YU, Yongjun, Shenzhen Guangdong 518129 (CN); WANG, Jiyong, Shenzhen Guangdong 518129 (CN); SHU, Bing, Shenzhen Guangdong 518129 (CN)
(74) Representative: Goddar, Heinz J.
(86) International application number: PCT/CN2012/074288
(87) International publication number: WO 2012/142947

(57) **Abstract**

Embodiments of the present invention disclose a method and an apparatus for sending and receiving a data block and a transmission system. A sending end extends a temporary flow identity TFI field and/or an uplink state flag USF field in a block sequence number BSN field of a block header of a data block; and the sending end sends the data block that includes the extended field to a receiving end. Accordingly, the receiving end receives a data block; the receiving end parses the data block to obtain an extension bit of a TFI field and/or a USF field from a BSN field of a block header of the data block; and the receiving end combines the obtained extension bit of the TFI field with data bits of the TFI field in the block header of the data block to obtain an extended TFI value, and combines the extension bit of the USF field with data bits of the USF field in the data block header to obtain an extended USF value. According to the embodiments of the present invention, access requirements of a huge number of terminals can be met.

## Description

### CROSS REFERENCE TO RELATED APPLICATION

This application claims priority to Chinese Patent Application No. 201110096811.2, filed with the Chinese Patent Office on April 18, 2011 and entitled "METHOD AND APPARATUS FOR SENDING AND RECEIVING DATA BLOCK AND TRANSMISSION SYSTEM", which is incorporated herein by reference in its entirety.

### TECHNICAL FIELD

The present invention relates to the field of wireless communications, and in particular, to a method and an apparatus for sending and receiving a data block and a transmission system.

### BACKGROUND

M2M (Machine to Machine) communication refers to a network communication implemented between one network element or between multiple network elements without human involvement. For example, the M2M communication is applied to such applications as traffic control and management, factory monitoring, and remote meter reading. According to a preliminary estimation, terminals used in person-to-person communication in the future are likely to occupy only one third of the total terminal market, while more communication will be M2M communication.

In M2M communication implemented by a GSM (Global System for Mobile communications, global system for mobile communications), all service data at an application layer is split or combined into RLC/MAC data blocks, and is transmitted on an air interface of radio resources. Radio resources of the air interface are organized in form of TBFs (Temporary Block Flow, temporary block flow). A TBF is a temporary connection between a mobile station and a network and exists only during data forwarding. The TBF also supports unidirectional forwarding of an LLC (logical link control, logical link control) packet data unit on a PDCH (Packet Data Channel, packet service channel). The network allocates a TFI (Temporary Flow Identity, temporary flow identity) to each TBF, where the TFI is used to identify a TBF uniquely. In addition, on a GPRS (General Packet Radio Service, general packet radio service) network, uplink data blocks are transmitted by using a USF (Uplink State Flag, uplink state flag) scheduling mode, that is, the USF is used to uniquely identify a terminal that schedules uplink data blocks.

However, during the research, it is found that in a data block under the existing GPRS/EGPRS, a TFI is five bits long, and can identify 32 TBFs at most; and the USF is three bits long, and can identify eight terminals at most. Evidently, in the prior art, due to the limited lengths of the TFI and the USF, only a limited number of terminals can be identified, thereby failing to meet access requirements of a huge number of terminals.

### SUMMARY

To solve the foregoing technical problem, embodiments of the present invention provide a method and an apparatus for sending and receiving a data block and a transmission system to meet access requirements of a huge number of terminals.

The embodiments of the present invention disclose the following technical solutions:
A method for sending a data block includes: extending, by a sending end, a temporary flow identity TFI field and/or an uplink state flag USF field in a block sequence number BSN field of a block header of a data block; and sending, by the sending end, the data block that includes the extended field to a receiving end.

A method for receiving a data block includes: receiving, by a receiving end, a data block; parsing, by the receiving end, the data block to obtain an extension bit of a TFI field and/or a USF field from a BSN field of a block header of the data block; and combining, by the receiving end, the extension bit of the TFI field that is obtained through parsing with data bits of the TFI field in the block header of the data block to obtain an extended TFI value, and combining the extension bit of the USF field with data bits of the USF field in the block header of the data block to obtain an extended USF value.

An apparatus for sending a data block includes: an encapsulating unit, configured to extend a TFI field and/or a USF field in a BSN field of a block header of a data block; and a sending unit, configured to send the data block that includes the extended field to a receiving end.

An apparatus for receiving a data block includes: a receiving unit, configured to receive a data block; a parsing unit, configured to parse the data block to obtain an extension bit of a TFI field and/or a USF field from a BSN field of a block header of the data block; and a combining unit, configured to combine the extension bit of the TFI field that is obtained through parsing with data bits of the TFI field in the block header of the data block to obtain an extended TFI value, and combine the extension bit of the USF field with data bits of the USF field in the block header of the data block to obtain an extended USF value.

A data transmission system includes a base station and a terminal, where the base station includes a base station identifying apparatus and a base station recognizing apparatus, and the terminal includes a terminal identifying apparatus and a terminal recognizing apparatus, where: the base station identifying apparatus is configured to extend a TFI field or extend a TFI field and a USF field in a BSN field of a block header of a downlink data block, and send the downlink data block that includes the extended field to the terminal; the terminal identifying apparatus is configured to extend a TFI field in a BSN field of a block header of an uplink data block, and send the data block that includes the extended field to the terminal, and receive the data block sent by the terminal; the base station recognizing apparatus is configured to receive the uplink data block sent by the terminal, parse the uplink data block to obtain an extension bit of the TFI field from the BSN field of the block header of the uplink data block, and combine the extension bit that is obtained through parsing with data bits of the TFI field to obtain an extended TFI value; and the terminal recognizing apparatus is configured to receive the downlink data block sent by the base station, parse the downlink data block to obtain an extension bit of the TFI field or obtain extension bits of the TFI field and the USF field from the BSN field of the block header of the downlink data block, and combine the extension bit of the TFI field that is obtained through parsing with data bits of the TFI field, or combine the extension bit of the TFI field that is obtained through parsing with data bits of the TFI field and combine the extension bit of the USF field with data bits of the USF field to obtain an extended TFI value and an extended USF value.

It can be seen from the foregoing embodiments that, the sending end extends a TFI field and/or a USF field by using one or more bits in a BSN field of a data block header, so as to enlarge the length of the TFI and/or the USF. Accordingly, the receiving end obtains an extension bit of the TFI field and/or the USF field from the BSN field of the data block header, and combines the extension bit with the TFI field and/or the USF field of the data block header to obtain an extended TFI value and/or an extended USF value. In this way, more terminals can be identified in the same PDCH, thereby meeting access requirements of a huge number of terminals.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a diagram illustrating a correspondence between window sizes and multiple timeslots in an existing EGPRS TBF mode;
FIG. 2 is a flowchart of an embodiment of a method for sending a data block according to the present invention;
FIG. 3 is a flowchart of another embodiment of a method for sending a data block according to the present invention;
FIG. 4-1 is a schematic structural diagram of a downlink RLC/MAC data block header where a TFI field is extended in a BSN field according to the present invention;
FIG. 4-2 is a schematic structural diagram of an uplink RLC/MAC data block header where TFI fields are extended in two BSN fields according to the present invention;
FIG. 4-3 is a schematic structural diagram of an uplink RLC/MAC data block header where continuous TFI fields are extended in two BSN fields according to the present invention;
FIG. 5 is a flowchart of another embodiment of a method for sending a data block according to the present invention;
FIG. 6-1 is a schematic structural diagram of a downlink RLC/MAC data block header where a USF field is extended in one BSN field according to the present invention;
FIG. 6-2 is a schematic structural diagram of a downlink RLC/MAC data block header where USF fields are extended in two BSN fields according to the present invention;
FIG. 7 is a flowchart of another embodiment of a method for sending a data block according to the present invention;
FIG. 8 is a flowchart of another embodiment of a method for sending a data block according to the present invention;
FIG. 9 is a flowchart of another embodiment of a method for sending a data block according to the present invention;
FIG. 10 is a flowchart of an embodiment of a method for receiving a data block according to the present invention;
FIG. 11 is a schematic structural diagram of an embodiment of an apparatus for sending a data block according to the present invention;
FIG. 12 is a schematic structural diagram of an encapsulating unit according to the present invention;
FIG. 13 is a schematic structural diagram of an embodiment of an apparatus for receiving a data block according to the present invention;
FIG. 14 is a schematic structural diagram of a parsing unit according to the present invention; and
FIG. 15 is a schematic structural diagram of an embodiment of a data transmission system according to the present invention.

### DESCRIPTION OF EMBODIMENTS

Generally, in a GSM system, each LLC frame at a high layer is formed by a series of RLC blocks, and each RLC block has a corresponding BSN (Block Sequence Number, block sequence number), and is transmitted according to the sequence of the BSN. A TBF is a basic unit in radio resource allocation and radio transmission, and each TBF is borne in a TDMA frame of a PDCH. RLC blocks are all borne by TBFs in transmission; and due to different coding schemes, one TBF may bear one or two RLC blocks. A BSN field is included in an RLC/MAC data block header. In GPRS, the BSN field is 7 bits long, while in EGPRS, the BSN field is 11 bits long.

With respect to the sending and receiving of data blocks, a sending end has a sending window, and a receiving end has a receiving window. The sending end must transmit data within the transmitting window, and move the transmitting window forward continuously with the successful transmission of data; the receiving end must also receive data within the receiving window, and move the receiving window forward continuously with the successful reception of data. Generally, to avoid a misplaced indication, a maximum value identified by the BSN field is at least twice the length of the window. For example, in the EGPRS, if the length of the transmitting window is 192, the maximum value identified by the BSN field should be 384, which means that a space actually needed by the BSN field is 9 bits, while a space occupied by the BSN field in the data block header is 11 bits. Therefore, two bits are wasted in one BSN field. In addition, one data block header may include two BSN fields or three BSN fields. Therefore, more spaces are wasted in one data block header. If only 9 bits are used to identify a data block sequence number in each BSN field, the remaining space can be used for other purposes, for example, extending a TFI field, or extending a USF field, or extending a TFI field and a USF field at the same time.

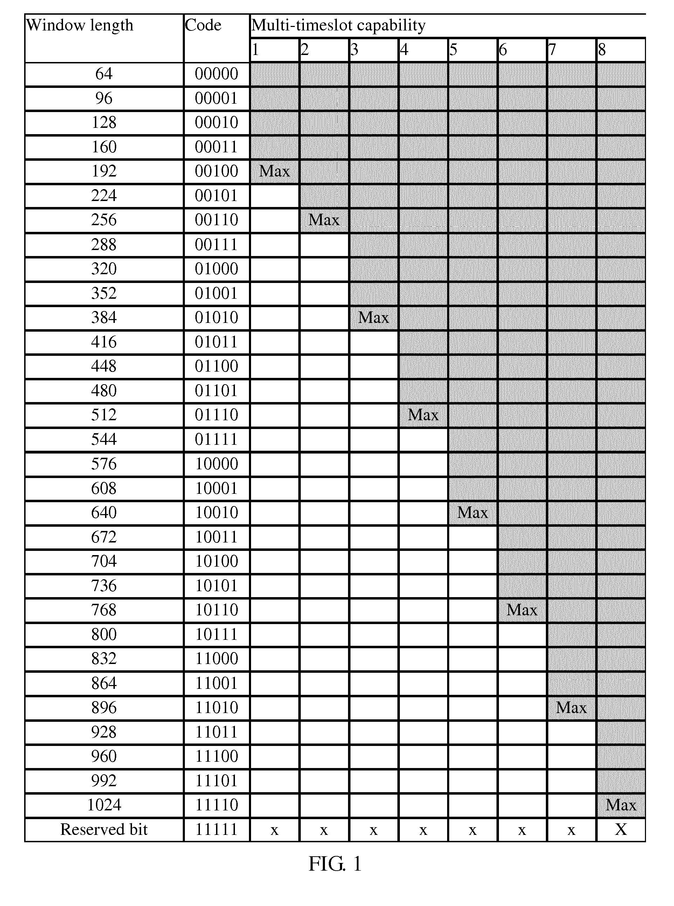

For M2M services, because data volumes of the services are small, only a single timeslot transmission capability is needed. As shown in FIG. 1, in a correspondence between window sizes and multiple timeslots in an existing EGPRS TBF mode, if a maximum window length needed under the single-timeslot capability is 192, the maximum value identified by one BSN field is 384 accordingly. That is to say, a space actually needed by one BSN field is at most 9 bits and may be smaller than 9 bits. Therefore, when M2M service data is transmitted in EGPRS, a BSN field in a data block header may be used to extend a TFI field and/or a USF field.

For better understanding of the foregoing objective, features, and merits of the present invention, embodiments of the present invention are described in detail in the following with reference to the accompanying drawings.

### Embodiment 1

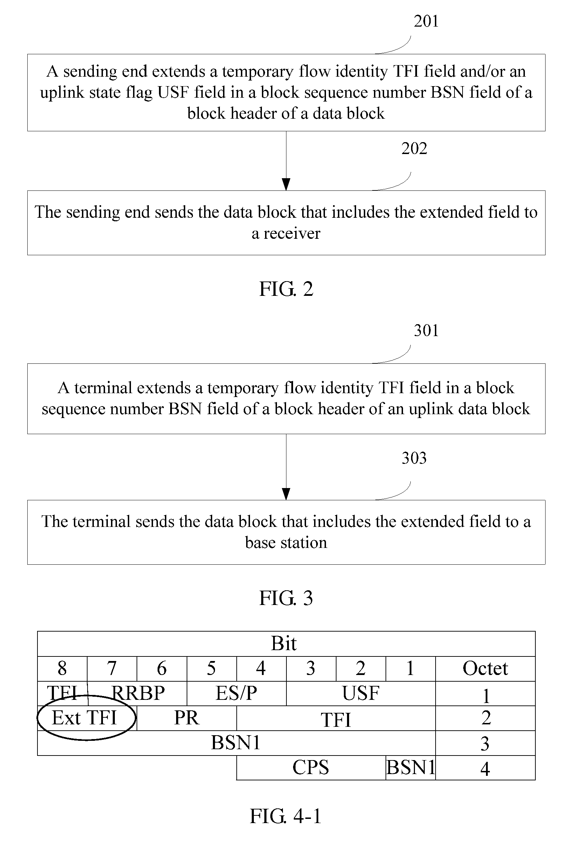

Please refer to FIG. 2, FIG.2 is a flowchart of an embodiment of a method for sending a data block according to the present invention. The method includes the following steps:
Step 201: A sending end extends a temporary flow identity TFI field and/or an uplink state flag USF field in a block sequence number BSN field of a block header of a data block.

The extending, by a sending end, a TFI field and/or an uplink state flag USF field in a BSN field of a block header of a data block includes: extending, by the sending end, a temporary flow identity TFI field in a block sequence number BSN field of a block header of an uplink data block; and extending, by the sending end, a TFI field and/or an uplink state flag USF field in a BSN field of a block header of a downlink data block.

Step 202: The sending end sends the data block that includes the extended field to a receiving end.

It can be seen from the foregoing embodiment that, at the sending end, a TFI field and/or a USF field is extended by using one or more bits in a BSN field of a data block header, so as to enlarge the length of the TFI and/or the USF. In this way, more terminals can be identified in the same PDCH, thereby meeting access requirements of a huge number of terminals.

### Embodiment 2

Please refer to FIG. 3, FIG. 3 is a flowchart of another embodiment of a method for sending a data block according to the present invention. In this embodiment, a terminal acts as a sending end to extend a TFI field in a BSN field of a block header of an uplink data block, and the method includes the following steps:
Step 301: A terminal extends a temporary flow identity TFI field in a block sequence number BSN field of a block header of an uplink data block.

For example, if there is only one BSN1 field in an uplink RLC/MAC data block header, one or more bits in the BSN1 field may be used to extend a TFI field. FIG. 4-1 is a schematic structural diagram of an uplink RLC/MAC data block header where a TFI field is extended in one BSN field according to the present invention.

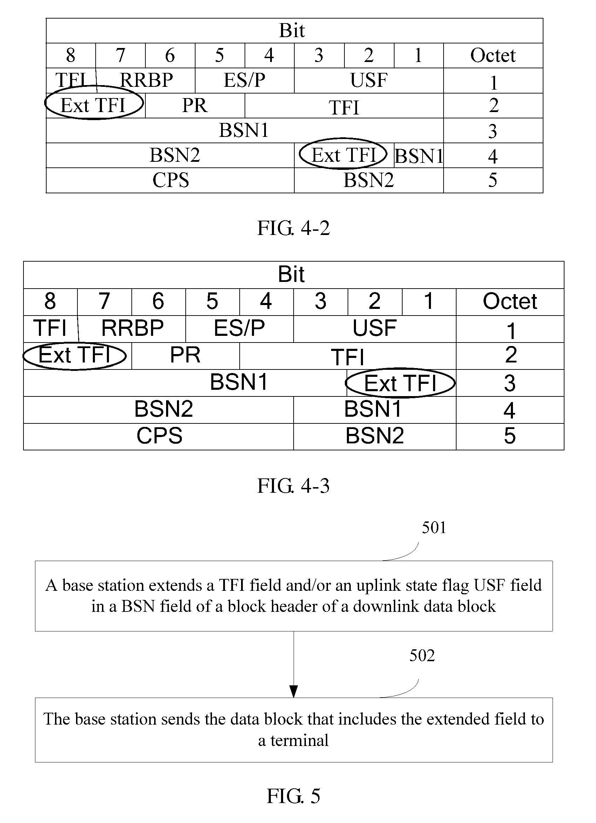

In another example, if there are two BSN fields (a BSN1 and a BSN2) in an RLC/MAC data block header, one or more bits in the BSN1 field and the BSN2 field may be used to extend a TFI field. FIG. 4-2 is a schematic structural diagram of an uplink RLC/MAC data block header where TFI fields are extended in two BSN fields according to the present invention. Preferably, when TFI fields are extended in the BSN1 field and the BSN2 field, by allocating the BSN1 field and the BSN2 field, it can be ensured that the extended TFI fields are continuous in a physical space. FIG. 4-3 is a schematic structural diagram of an uplink RLC/MAC data block header where continuous TFI fields are extended in two BSN fields according to the present invention.

It should be noted that, several successive bits starting from the lowest bit in the BSN field may be used to extend the TFI field, or several successive bits starting from the highest bit may be used to extend the TFI field. The embodiment of the present invention sets no limitation on a specific position of the extension bit in the BSN field.

Step 302: The terminal sends the data block that includes the extended field to a base station.

The terminal may send the data block to the base station by using any one of existing methods for sending a data block, which is not limited in the embodiment of the present invention.

It can be seen from the foregoing embodiment that, the terminal extends a TFI field by using one or more bits in a BSN field of a block header of an uplink data block, so as to enlarge the length of the TFI. In this way, more terminals can be identified in uplink data, thereby meeting access requirements of a huge number of terminals.

### Embodiment 3

Please refer to FIG. 5, FIG. 5 is a flowchart of another embodiment of a method for sending a data block according to the present invention. In this embodiment, a base station acts as a sending end to extend a TFI field and/or an uplink state flag USF field in a BSN field of a block header of a downlink data block, and the method includes the following steps:
Step 501: A base station extends a TFI field and/or an uplink state flag USF field in a BSN field of a block header of a downlink data block.

Because a field that needs to be extended in the block header of the downlink data block may be a TFI field, or a USF field, or a TFI field and a USF field are extended at the same time, the TFI field and/or the USF field may be extended in the BSN field.

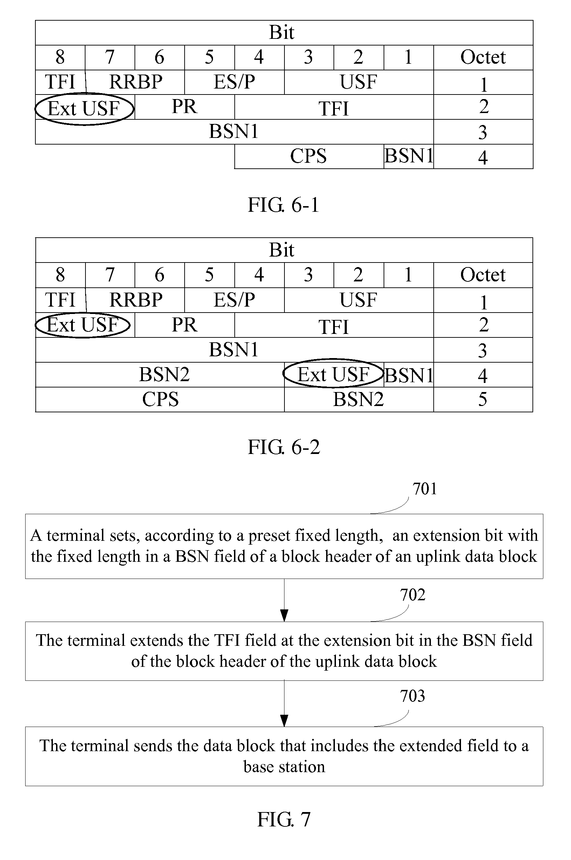

In addition to extending the TFI field according to the structures illustrated in FIG. 4-1 and FIG. 4-2, a USF field may also be extended by using one or more bits in a BSN field according to a mode illustrated in FIG. 6-1. FIG. 6-1 is a schematic structural diagram of a downlink RLC/MAC data block header where a USF field is extended in one BSN field according to the present invention. In addition to the extension mode illustrated in FIG. 6-1, USF fields may also be extended in two BSN fields. FIG. 6-2 illustrates the extending of USF fields in two BSN fields of a downlink RLC/MAC data block header according to the present invention. In addition, preferably, with reference to the mode illustrated in FIG. 4-3, it can also be achieved that the extended USF fields are continuous in a physical space through allocation.

Certainly, in addition to the extension modes illustrated in FIG. 6-1 and FIG. 6-2, a TFI field and a USF field may be extended at the same time in one BSN field of a downlink RLC/MAC data block header, or, a TFI field is extended by using one field of two BSN fields, and a USF field is extended by using the other field of the two BSN fields. The embodiment of the present invention does not list all extension modes.

In addition, when a TFI field and a USF field are extended at the same time in two BSN fields, it can also be ensured that the extended TFI fields and USF fields are continuous in a physical space through allocation.

Step 502: The base station sends the data block that includes the extended field to a terminal.

The base station may send the data block to the terminal by using any one of existing methods for sending a data block, which is not limited in the embodiment of the present invention.

It can be seen from the foregoing embodiment that, the base station extends a TFI field and/or a USF field by using one or more bits in a BSN field of a block header of a downlink data block, so as to enlarge the length of the TFI and/or the USF. In this way, more terminals can be identified in downlink data, thereby meeting access requirements of a huge number of terminals.

### Embodiment 4

This embodiment is different from Embodiment 2 in that: this embodiment makes a further limitation on a process of extending a TFI field by using a BSN field, that is, the length of an extension bit used to extend a TFI field in a BSN field is fixed, and the TFI field is extended at the extension bit with the fixed length. Please refer to FIG. 7, FIG. 7 is a flowchart of another embodiment of a method for sending a data block according to the present invention. The method includes the following steps:
Step 701: A terminal sets, according to a preset fixed length, an extension bit with the fixed length in a BSN field of a block header of an uplink data block.

For example, the preset fixed length is 2 bits, and a 2-bit space in the BSN field is used as extension bits. Preferably, to avoid damaging original basic functions implemented by the BSN field, the preset fixed length should not be greater than a difference between a total length of the BSN field and a length actually needed by the BSN field. For example, if the length actually needed by the BSN field is 9 bits and the total length of the BSN field is 11 bits, the preset fixed length should not be greater than 2 bits.

In a case where a TFI value is allocated to the terminal in the BSN field of the block header of the uplink data block header, when a network side allocates a radio resource to the terminal, the network side adds an extended TFI field, for example, an EXTENDED_TFI_ASSIGNMENT field, to an assignment message (for example, a Packet Uplink Assignment message, or a Packet Downlink Assignment message, or a Packet Timeslot Reconfigure message, or another available message), where the field is used to indicate an extended field value of the existing TFI field and occupies a fixed-length space, for example, 4 bits. The EXTENDED_TFI_ASSIGNMENT field is combined with a DOWNLINK_TFI_ASSIGNMENT field in a downlink assignment message to indicate a TFI value allocated to the terminal. In this way, when a sending end sends a data block, 4 bits in the BSN field are used as extension bits of the TFI according to the length of the EXTENDED_TFI_ASSIGNMENT field.

It should be noted that, the foregoing mode may also be applied to downlink data. In this case, the extending, by a sending end, a TFI field and/or a USF field in a BSN field of a block header of a downlink data block includes: setting, by the sending end, according to a preset fixed length, the fixed length extension bit in the BSN field of the block header of the downlink data block; and extending, by the sending end, the TFI field and/or the USF field at the extension bit in the BSN field of the downlink data block header.

For example, assuming that a USF value is allocated to the terminal in the BSN field of the block header of the downlink data block, when the network side allocates a radio resource to the terminal, the network side adds an extended USF field, for example, an EXTENDED_USF field, to an assignment message, where the field is used to indicate the length of an extension bit of the existing USF field and occupies a fixed length space, for example, 4 bits. The EXTENDED_USF field is combined with a USF_TNX field (the USF_TNX field indicates a USF value of the terminal in an Xth timeslot, where X is any number from 0 to 7) in a downlink assignment message to indicate the USF value allocated to the terminal. If a value of a USF_TN0 field is 001, a value of a USF_TN2 field is 010, and a value of the EXTENDED_USF field is 0101, the USF value at timeslot 0 is 0010101 and the USF value at timeslot 2 is 0100101. In this way, when the sending end sends a data block, the sending end uses 4 bits in the BSN field as extension bits of the USF according to the length of the EXTENDED_USF field.

Here, for different timeslots of the same terminal, the same EXTENDED_USF field is used in the assignment message to extend allocated different USF fields. Certainly, in addition, for multiple timeslots allocated to the same terminal, different values in the assignment message may also be used to extend the USF field. For example, corresponding to eight different timeslots, eight EXTENDED_USFX (X is any number from 0 to 7) fields are respectively added to the assignment message to extend corresponding USF X (X is any number from 0 to 7) fields.

Step 702: The terminal extends the TFI field at the extension bit in the BSN field of the block header of the uplink data block.

Certainly, for downlink data, a base station extends a TFI field and/or a USF field at an extension bit in a BSN field of a block header of a downlink data block.

Step 703: The terminal sends the data block that includes the extended field to a base station.

The data block may be sent by using any one of existing methods for sending a data block, which is not limited in the embodiment of the present invention.

It can be seen from the foregoing embodiment that, the terminal extends a TFI field in a BSN field of a block header of an uplink data block, so as to enlarge the length of TFI data bits. In this way, more terminals can be identified in uplink data, thereby meeting access requirements of a huge number of terminals.

### Embodiment 5

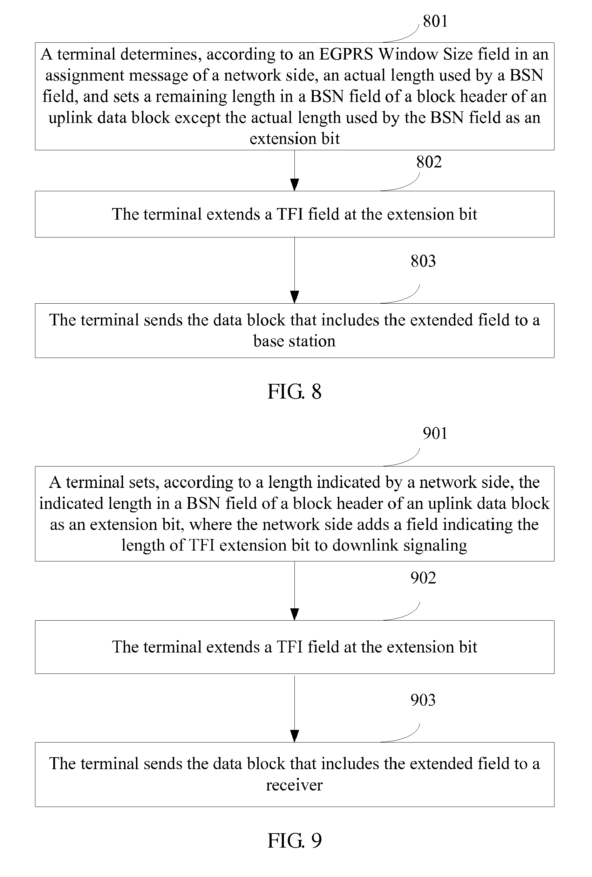

This embodiment is different from Embodiment 2 in that: this embodiment makes a further limitation on a process of extending a TFI field by using a BSN field, that is, the length of an extension bit used to extend a TFI field in a BSN field is changed dynamically according to a window length (EGPRS Window Size) set in a radio resource assignment message, and the TFI field is extended at the extension bit with different lengths. Please refer to FIG. 8, FIG. 8 is a flowchart of another embodiment of a method for sending a data block according to the present invention. The method includes the following steps:
Step 801: A terminal determines, according to an EGPRS Window Size field in an assignment message of a network side, an actual length used by a BSN field, and sets a remaining length in the BSN field of a block header of an uplink data block except the actual length used by the BSN field as an extension bit.

For example, the length of a transmitting window that is indicated by the EGPRS Window Size field in the assignment message of the network side is 64, and if calculated on the basis that a maximum value identified by the BSN field is at least twice the length of the window, the maximum length value indicated by the BSN field is 128. Therefore, the actual length used by the BSN field is 7 bits. For a BSN field with a total length of 11 bits, the remaining space except the actual length used by the BSN field is 11 - 7 = 4 bits, and the 4 bits in the remaining space are used as extension bits.

Still using the setting of the TFI field extension bit as an example, when the network side allocates a radio resource to the terminal, an EGPRS Window Size field is used in an assignment message (for example, a Packet Uplink Assignment message, or a Packet Downlink Assignment message, or a Packet Timeslot Reconfigure message, or another available message) to calculate, according to a window length indicated by the field, the length actually used by the BSN field, where the calculation method may be as follows: the maximum value identified by the BSN field is twice the length of the window. In this way, when a sending end sends a data block, the sending end calculates, according to the EGPRS Window Size field, the length actually used by the BSN field, and further obtains the length of an extension bit. In addition, an extended TFI field, for example, an EXTENDED_TFI_ASSIGNMENT field, also needs to be added to the assignment message, and the length of the field may be fixed, and a valid length of the EXTENDED_TFI_ASSIGNMENT field is determined by the length of the extension bit of the BSN field that is calculated according to the EGPRS Window Size field. For example, if the fixed length of the EXTENDED_TFI_ASSIGNMENT field is 4 bits, and the length, which is calculated according to the EGPRS Window Size field, of the extension bit used to extend the TFI in the BSN field is only 2 bits, only 2 bits in a 4-bit space of the EXTENDED_TFI_ASSIGNMENT field are valid extension bits used to extend the TFI field. For example, the high 2 bits or low 2 bits of the EXTENDED_TFI_ASSIGNMENT field are valid extension bits actually used to extend the TFI field, and the other bits are invalid bits. Finally, the valid extension bits in the EXTENDED_TFI_ASSIGNMENT field are combined with a DOWNLINK_TFI_ASSIGNMENT field in a downlink assignment message or with an UPLINK_TFI_ASSIGNMENT field in an uplink assignment message to indicate a TFI value allocated to the terminal.

It should be noted that, the foregoing mode may also be applied to downlink data. In this case, the extending, by a sending end, a TFI field and/or a USF field in a BSN field of a block header of a downlink data block includes: determining, by the sending end, according to an EGPRS Window Size field in an assignment message of a network side, an actual length used by the BSN field, and setting a remaining length in the BSN field of the block header of the downlink data block except the actual length used by the BSN field as an extension bit.

Step 802: The terminal extends a TFI field at the extension bit.

Certainly, for downlink data, a base station extends a TFI field and/or a USF field at the extension bit.

Step 803: The terminal sends the data block that includes the extended field to a base station.

The data block may be sent by using any one of existing methods for sending a data block, which is not limited in the embodiment of the present invention.

It can be seen from the foregoing embodiment that, the terminal extends a TFI field in a BSN field of a block header of an uplink data block, so as to enlarge the length of TFI data bits. In this way, more terminals can be identified in uplink data, thereby meeting access requirements of a huge number of terminals.

### Embodiment 6

This embodiment is different from Embodiment 5 in that: the length of an extension bit used to extend a TFI field in a BSN field is determined according to a length indicated in a radio resource assignment message. Please refer to FIG. 9, FIG. 9 is a flowchart of another embodiment of a method for sending a data block according to the present invention. The method includes the following steps:
Step 901: A terminal sets, according to a length indicated by a network side, the indicated length in a BSN field of a block header of an uplink data block as an extension bit, where the network side adds a field indicating the length of TFI extension bit to downlink signaling.

For example, the network side indicates, in a radio resource assignment message, that the length of an extension bit used to extend a TFI field in the BSN field is 2 bits. Preferably, to avoid damaging original basic functions implemented by the BSN field, the length of the extension bit that is indicated by the network side should not be greater than a difference between a total length of the BSN field and a length actually needed by the BSN field. For example, if the length actually needed by the BSN field is 9 bits and the total length of the BSN field is 11 bits, the length of the extension bit that is indicated by the network side should not be greater than 2 bits. Certainly, the network side may indicate the length of the extension bit in downlink signaling other than the radio resource assignment message, which is not limited in the embodiment of the present invention.

When the network side allocates a radio resource to the terminal, the network side adds a field indicating the length of the extension bit, for example, an EXTENDED_TFI_LENGTH field, to an assignment message (for example, a Packet Uplink Assignment message, or a Packet Downlink Assignment message or a Packet Timeslot Reconfigure message, or another available message). The EXTEND_ED_TFI_LENGTH field indicates the length of the extension bit used to extend the TFI field in the BSN. For example, the EXTENDED_TFI_LENGTH field indicates that the length of the extension bit is 3 bits. In addition, an extended TFI field, for example, an EXTENDED_TFI_ASSIGNMENT field, also needs to be added to the assignment message, and the length of the extension bit in this field is determined according to a value indicated by the EXTENDED_TFI_LENGTH field. For example, if the value indicated by the EXTENDED_TFI_LENGTH field is 3, the length of the extension bit in the EXTENDED_TFI_ASSIGNMENT field is 3 accordingly, for example, 001; if the value indicated by the EXTENDED_TFI_LENGTH field is changed to 2, the length of the extension bit in the EXTENDED_TFI_ASSIGNMENT field is changed to 2 accordingly. Finally, the extension bit in the EXTENDED_TFI_ASSIGNMENT field are combined with a DOWNLINK_TFI_ASSIGNMENT field in a downlink assignment message or with an UPLINK_TFI_ASSIGNMENT field in an uplink assignment message to indicate an extended TFI value.

It should be noted that, the foregoing mode may also be applied to downlink data. In this case, the extending, by a sending end, a TFI field and/or a USF field in a BSN field of a block header of a downlink data block includes: setting, by the sending end, according to a length indicated by a network side, the indicated length in the BSN field of the block header of the downlink data block as an extension bit, where the network side adds a field with the length of the extension bit of the TFI field and/or the USF field to downlink signaling.

Step 902: The terminal extends a TFI field at the extension bit.

Certainly, for downlink data, the sending end extends a TFI field and/or a USF field at the extension bit.

Step 903: The terminal sends the data block that includes the extended field to a receiving end.

Here, the data block may be sent by using any one of existing methods for sending a data block, which is not limited in the embodiment of the present invention.

It can be seen from the foregoing embodiment that, the terminal extends a TFI field in a BSN field of a block header of an uplink data block, so as to enlarge the length of TFI data bits. In this way, more terminals can be identified in uplink data, thereby meeting access requirements of a huge number of terminals.

### Embodiment 7

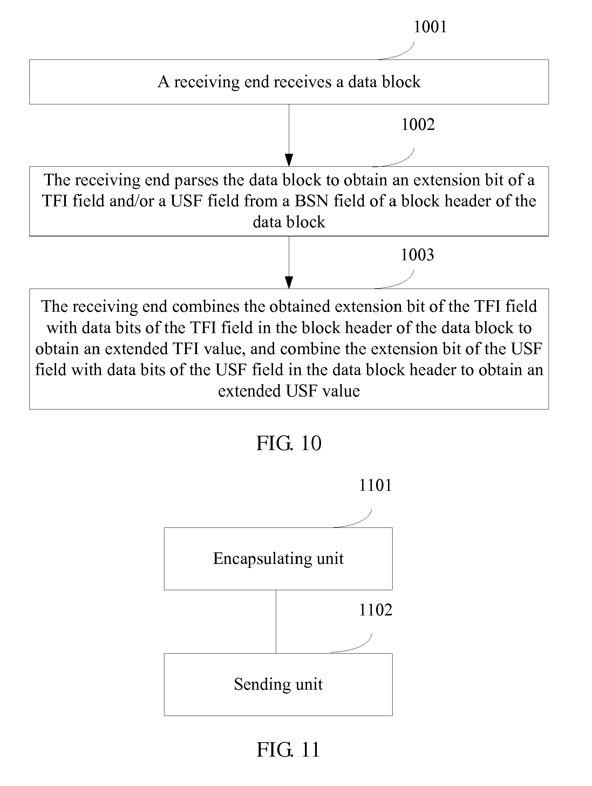

Corresponding to the method for sending a data block provided in the foregoing Embodiment 1, an embodiment of the present invention further provides a method for receiving a data block. Please refer to FIG. 10, FIG. 10 is a flowchart of an embodiment of a method for receiving a data block according to the present invention. The method includes the following steps:
Step 1001: A receiving end receives a data block.

Here, the data block may be sent by using any one of existing methods for receiving a data block, which is not limited in the embodiment of the present invention.

Step 1002: The receiving end parses the data block to obtain an extension bit of a TFI field and/or a USF field from a BSN field of a block header of the data block.

The parsing, by the receiving end, the data block to obtain an extension bit of a TFI field and/or a USF field from a BSN field of a block header of the data block includes: parsing, by the receiving end, an uplink data block to obtain an extension bit of a TFI field from a BSN field of a block header of the uplink data block; and parsing, by the receiving end, a downlink data block to obtain an extension bit of a TFI field and/or a USF field from a BSN field of a block header of the downlink data block.

The parsing, by the receiving end, the data block to obtain an extension bit of an extended TFI field and/or an extended USF field from a BSN field of a block header of the data block includes: reading, by the receiving end, according to a fixed length of the extension bit or according to a length of the extension bit that is indicated by a network side, the extension bit of the TFI field and/or the USF field from the BSN field of the block header of the data block, where the network side adds a field with the length of TFI field extension bit to downlink signaling.

For example, if the length used to extend the TFI field in the BSN field is fixed, for example, 4 bits, when the data block is parsed, 4-bit data bits are read starting from a specific position in the BSN field of the block header of the data block. For example, 4-bit data bits are read successively starting from the highest bit or 4 data bits are read successively starting from the lowest bit. Certainly, here, a value of 4 bits is only an assumption, and another value may be taken.

If the length of the extension bit in the BSN field is specified by the network side by using a radio resource assignment message, for example, the network side adds an EXTENDED_TFI_LENGTH field to the assignment message, the network side indicates the length of TFI extension bit in this field, and indicates that the length of the extension bit is 3 bits. When the data block is parsed, 3-bit data bits are read starting from a specific position in the BSN field of the block header of the data block according to the length of the extension bit that is indicated by the network side. For example, 3-bit data bits are read successively starting from the highest bit or 3-bit data bits are read successively starting from the lowest bit. Certainly, here, a value of 3 bits is only an assumption, and another value may be taken.

In another parsing mode, the parsing, by the receiving end, the data block to obtain an extension bit of a TFI field and/or a USF field from a BSN field of a block header of the data block includes: determining, by the receiving end, according to an EGPRS Window Size field in an assignment message of a network side, an actual length used by the BSN field; and determining, by the receiving end, a remaining length except the actual length used by the BSN field as a length of the extension bit, and reading, according to the determined length of the extension bit, the extension bit of the TFI field and/or the USF field from the block header of the data block.

For example, if the length of TFI extension bit in the BSN field is changed dynamically, and the length of the extension bit is determined according to the length of a transmitting window that is indicated by the network side. For example, the EGPRS Window Size field in the assignment message of the network side indicates a window length, and the length actually needed by the BSN field is calculated according to the window length indicated by the field, where the calculation method may be as follows: a maximum value identified by the BSN field is twice the length of the window. In this way, the length actually needed by the BSN field is calculated according to the EGPRS Window Size field, and further the remaining length in the BSN field is obtained, where the remaining length in the BSN field is used as the length for TFI extension.

Step 1003: The receiving end combines the extension bit of the TFI field that is obtained through parsing with data bits of the TFI field in the block header of the data block to obtain an extended TFI value, and combines the extension bit of the USF field with data bits of the USF field in the block header of the data block to obtain an extended USF value.

It can be seen from the foregoing embodiment that, the receiving end obtains an extension bit of a TFI field and/or a USF field from a BSN field of a block header of a data block, and combines the extension bit with the TFI field and/or the USF field of the block header of the data block to obtain an extended TFI value and/or an extended USF value. In this way, more terminals can be identified in the same PDCH, thereby meeting access requirements of a huge number of terminals.

### Embodiment 8

Corresponding to the method for sending a data block, an embodiment of the present invention further provides an apparatus for sending a data block. FIG. 11 is a schematic structural diagram of an embodiment of an apparatus for sending a data block according to the present invention. The apparatus includes an encapsulating unit 1101 and a sending unit 1102. With reference to a working principle of the apparatus, the following further describes the internal structure and connection relations of the apparatus.

The encapsulating unit 1101 is configured to extend a TFI field and/or a USF field in a BSN field of a block header of a data block.

The sending unit 1102 is configured to send the data block that includes the extended field to a receiving end.

Specifically, the encapsulating unit 1101 includes an uplink encapsulating unit and a downlink encapsulating unit, where:
the uplink encapsulating unit is configured to extend a TFI field in a BSN field of a block header of an uplink data block; and
the downlink encapsulating unit is configured to extend a TFI field and/or a USF field in a BSN field of a block header of a downlink data block.

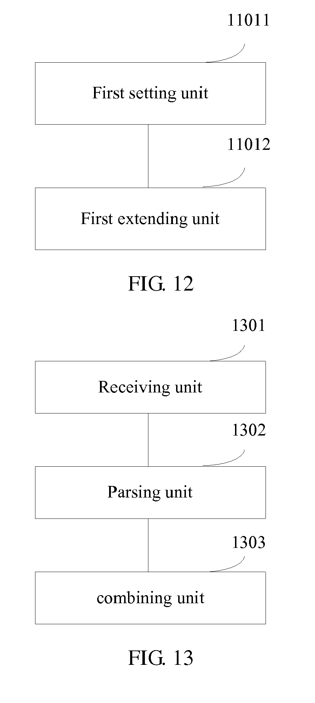

Preferably, FIG. 12 is a schematic structural diagram of an encapsulating unit according to the present invention. As shown in FIG. 12, the foregoing encapsulating unit 1101 further includes a first setting unit 11011 and a first extending unit 11012.

The first setting unit 11011 is configured to set, according to a preset fixed length, an extension bit with the fixed length in the BSN field of the block header of the data block.

The second extending unit 11012 is configured to extend the TFI field and/or the USF field at the extension bit.

In addition to the structure illustrated in FIG. 12, preferably, the encapsulating unit 1101 has an alternative structure. The encapsulating unit 1101 includes:
a second setting unit, configured to determine, according to an EGPRS Window Size field in an assignment message of a network side, an actual length used by the BSN field, and set a remaining length in the BSN field of the block header of the data block except the actual length used by the BSN field as an extension bit, or, set, according to a length indicated by a network side, the indicated length in the BSN field of the block header of the data block as an extension bit, where the network side adds a field with the length of the extension bit of the TFI field and/or the USF field to downlink signaling; and
a second extending unit, configured to extend the TFI field and/or the USF field at the extension bit.

It can be seen from the foregoing embodiment that, the base station extends a TFI field in a BSN field of a block header of an uplink data block, so as to enlarge the length of TFI data bits. In this way, more terminals can be identified in uplink data, thereby meeting access requirements of a huge number of terminals.

### Embodiment 9

Corresponding to the method for receiving a data block, an embodiment of the present invention further provides an apparatus for receiving a data block. FIG. 13 is a schematic structural diagram of an embodiment of an apparatus for receiving a data block according to the present invention. The apparatus includes a receiving unit 1301, a parsing unit 1302, and a combining unit 1303. With reference to a working principle of the apparatus, the following further describes the internal structure and connection relations of the apparatus.

The receiving unit 1301 is configured to receive a data block.

The parsing unit 1302 is configured to parse the data block to obtain an extension bit of a TFI field and/or a USF field from a BSN field of a block header of the data block.

The combining unit 1303 is configured to combine the extension bit of the TFI field that is obtained through parsing with data bits of the TFI field in the block header of the data block to obtain an extended TFI value, and combine the extension bit of the USF field with data bits of the USF field in the block header of the data block to obtain an extended USF value.

Specifically, the parsing unit 1302 includes an uplink parsing unit and a downlink parsing unit.

The uplink parsing unit is configured to parse an uplink data block to obtain an extension bit of a TFI field from a BSN field of a block header of an uplink data block.

The downlink parsing unit is configured to parse a downlink data block to obtain an extension bit of a TFI field and/or a USF field from a BSN field of a block header of a downlink data block.

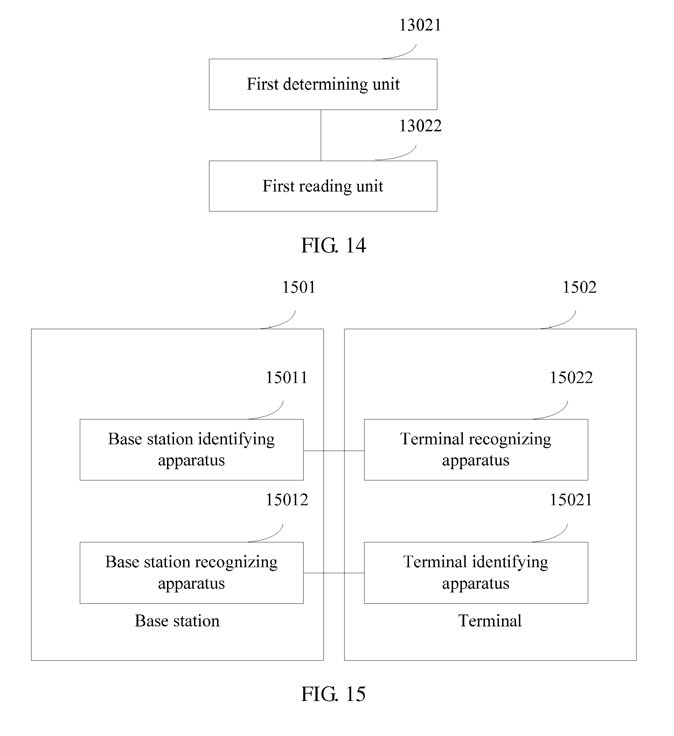

Preferably, FIG. 14 is a schematic structural diagram of a parsing unit according to the present invention. As shown in FIG. 14, the parsing unit 1302 further includes:
a first determining unit 13021, configured to determine, according to an EGPRS Window Size field in an assignment message of a network side, an actual working length used by the BSN field; and
a first reading unit 13022, configured to determine a remaining length except the actual working length used by the BSN field as a length of the extension bit, and read, according to the determined length of the extension bit, the extension bit of the TFI field and/or the USF field from the BSN field of the block header of the data block.

It can be seen from the foregoing embodiment that, the terminal extends a TFI field by using one or more bits in a BSN field of an uplink data block header, so as to enlarge the length of the TFI. In this way, more terminals can be identified in uplink data, thereby meeting access requirements of a huge number of terminals.

### Embodiment 10

The present invention further provides a data transmission system. FIG. 15 is a schematic structural diagram of an embodiment of a data transmission system according to the present invention. The system includes a base station 1501 and a terminal 1502, where the base station 1501 includes a base station identifying apparatus 15011 and a base station recognizing apparatus 15012, and the terminal 1502 includes a terminal identifying apparatus 15021 and a terminal recognizing apparatus 15022.

The base station identifying apparatus 15011 is configured to extend a TFI field or extend a TFI field and a USF field in a BSN field of a block header of a downlink data block, and send the downlink data block that includes the extended field to the terminal.

The terminal identifying apparatus 15021 is configured to extend a TFI field in a BSN field of a block header of an uplink data block, and send the data block that includes the extended field to the terminal, and receive the data block sent by the terminal.

The base station recognizing apparatus 15012 is configured to receive the uplink data block sent by the terminal, parse the uplink data block to obtain an extension bit of the TFI field from the BSN field of the block header of the uplink data block, and combine the extension bit that is obtained through parsing with data bits of the TFI field to obtain an extended TFI value.

The terminal recognizing apparatus 15022 is configured to receive the downlink data block sent by the base station, parse the downlink data block to obtain an extension bit of the TFI field or obtain an extension bit of the TFI field and the USF field from the BSN field of the block header of the downlink data block, and combine the extension bit of the TFI field that is obtained through parsing with data bits of the TFI field, or combine the extension bit of the TFI field that is obtained through parsing with data bits of the TFI field and combine the extension bit of the USF field with data bits of the USF field to obtain an extended TFI value and an extended USF value.

It can be seen from the foregoing embodiment that, the terminal extends a TFI field in a BSN field of a block header of an uplink data block, so as to enlarge the length of TFI data bits. Accordingly, the base station obtains an extension bit of a TFI field from a BSN field of a block header of a downlink data block. Then, the TFI extension bit is combined with data bits of a TFI field of a block header of a data block to obtain an extended TFI value. In this way, more terminals can be identified in uplink data and downlink data by using the extended TFI value, thereby meeting access requirements of a huge number of terminals.

Alternatively, the base station, the terminal extends a TFI field in a BSN field of a block header of an uplink data block, so as to enlarge the length of TFI data bits. Accordingly, the base station obtains extension bits of a TFI field and a USF field from a BSN field of a block header of a downlink data block. Then, the TFI extension bit is combined with data bits of a TFI field of a block header of a data block, and the USF extension bit is combined with data bits of a USF field of a block header of a data block to obtain an extended TFI value and an extended USF value. Therefore, more terminals can be identified in uplink data and downlink data by using the extended TFI value, and at the same time, more terminals can be identified in downlink data by using the extended USF value. Finally, access requirements of a huge number of terminals are met.

It should be noted that, a person of ordinary skill in the art can understand that, all or a part of the processes in the foregoing method embodiments may be implemented by a computer program instructing relevant hardware. The program may be stored in a computer readable storage medium. When the program is executed, the processes of the foregoing method embodiments are performed. The storage medium may be a magnetic disk, an optical disk, a read-only memory (Read-Only Memory, ROM), a random access memory (Random Access Memory, RAM), or the like.

A method and an apparatus for sending and receiving a data block and a transmission system that are provided in the present invention have been described in detail above. Although the principles and implementation manners of the present invention are described through specific embodiments in this specification, the descriptions of the embodiments are only intended to help understand the method and core ideas of the present invention. Meanwhile, a person of ordinary skill in the art may make modifications to the specific implementation modes and application scopes according to the ideas of the present invention. To conclude, the content of the specification should not be construed as a limitation to the present invention.

## Claims

1. A method for sending a data block, **characterized by** comprising:
extending, by a sending end, a temporary flow identity, TFI, field and/or an uplink state flag, USF, field in a block sequence number, BSN, field of a block header of a data block; and
sending, by the sending end, the data block that comprises the extended field to a receiving end.

2. The method according to claim 1, wherein the extending, by a sending end, a TFI field and/or an uplink state flag, USF, field in a BSN field of a block header of a data block comprises:
extending, by the sending end, a TFI field in a BSN field of a block header of an uplink data block; and
extending, by the sending end, a TFI field and/or a USF field in a BSN field of a block header of a downlink data block.

3. The method according to claim 1, wherein the extending, by a sending end, a TFI field and/or a USF field in a BSN field of a block header of a data block comprises:
setting, by the sending end, according to a preset fixed length, an extension bit with the fixed length in the BSN field of the block header of the data block; and
extending, by the sending end, the TFI field and/or the USF field at the extension bit.

4. The method according to claim 1, wherein the extending, by a sending end, a TFI field and/or a USF field in a BSN field of a block header of a data block comprises:
determining, by the sending end, according to an EGPRS Window Size field in an assignment message of a network side, an actual length used by the BSN field, and setting a remaining length in the BSN field of the block header of the data block except the actual length used by the BSN field as an extension bit, or, setting, by the sending end, according to a length indicated by a network side, the indicated length in the BSN field of the block header of the data block as an extension bit, wherein the network side adds a field with the length of the extension bit of the TFI field and/or the USF field to downlink signaling; and
extending, by the sending end, the TFI field and/or the USF field at the extension bit.

5. A method for receiving a data block, **characterized by** comprising:
receiving, by a receiving end, a data block;
parsing, by the receiving end, the data block to obtain an extension bit of a TFI field and/or a USF field from a BSN field of a block header of the data block; and
combining, by the receiving end, the extension bit of the TFI field that is obtained through parsing with data bits of the TFI field in the block header of the data block to obtain an extended TFI value, and combining the extension bit of the USF field with data bits of the USF field in the block header of the data block to obtain an extended USF value.

6. The method according to claim 5, wherein the parsing, by the receiving end, the data block to obtain an extension bit of a TFI field and/or a USF field from a BSN field of a block header of the data block comprises:
parsing, by the receiving end, an uplink data block to obtain an extension bit of a TFI field from a BSN field of a block header of the uplink data block; and
parsing, by the receiving end, a downlink data block to obtain an extension bit of a TFI field and/or a USF field from a BSN field of a block header of the downlink data block.

7. The method according to claim 5, wherein the parsing, by the receiving end, the data block to obtain an extension bit of a TFI field and/or a USF field from a BSN field of a block header of the data block comprises:
reading, by the receiving end, according to a fixed length of the extension bit or according to a length of the extension bit that is indicated by a network side, the extension bit of the TFI field and/or the USF field from the BSN field of the block header of the data block, wherein the network side adds a field with the length of the extension bit of the TFI field and/or the USF field to downlink signaling.

8. The method according to claim 5, wherein the parsing, by the receiving end, the data block to obtain an extension bit of a TFI field from a BSN field of a block header of the data block comprises:
determining, by the receiving end, according to an EGPRS Window Size field in an assignment message of a network side, an actual working length used by the BSN field; and
determining, by the receiving end, a remaining length except the actual working length used by the BSN field as a length of the extension bit, and reading, according to the determined length of the extension bit, the extension bit of the TFI field and/or the USF field from the BSN field of the block header of the data block.

9. An apparatus for sending a data block, **characterized by** comprising:
an encapsulating unit, configured to extend a TFI field and/or a USF field in a BSN field of a block header of a data block; and
a sending unit, configured to send the data block that comprises the extended field to a receiving end.

10. The apparatus according to claim 9, wherein the encapsulating unit comprises:
an uplink encapsulating unit, configured to extend a TFI field in a BSN field of a block header of an uplink data block; and
a downlink encapsulating unit, configured to extend a TFI field and/or a USF field in a BSN field of a block header of a downlink data block.

11. The apparatus according to claim 9, wherein the encapsulating unit comprises:
a first setting unit, configured to set, according to a preset fixed length, an extension bit with the fixed length in the BSN field of the block header of the data block; and
a first extending unit, configured to extend the TFI field and/or the USF field at the extension bit.

12. The apparatus according to claim 9, wherein the encapsulating unit comprises:
a second setting unit, configured to determine, according to an EGPRS Window Size field in an assignment message of a network side, an actual length used by the BSN field, and set a remaining length in the BSN field of the block header of the data block except the actual length used by the BSN field as an extension bit, or, set, according to a length indicated by a network side, the indicated length in the BSN field of the block header of the data block as an extension bit, wherein the network side adds a field with the length of the extension bit of the TFI field and/or the USF field to downlink signaling; and
a second extending unit, configured to extend, by the sending end, the TFI field and/or the USF field at the extension bit.

13. An apparatus for receiving a data block, **characterized by** comprising:
a receiving unit, configured to receive a data block;
a parsing unit, configured to parse the data block to obtain an extension bit of a TFI field and/or a USF field from a BSN field of a block header of the data block; and
a combining unit, configured to combine the extension bit of the TFI field that is obtained through parsing with data bits of the TFI field in the block header of the data block to obtain an extended TFI value, and combine the extension bit of the USF field with data bits of the USF field in the block header of the data block to obtain an extended USF value.

14. The apparatus according to claim 13, wherein the parsing unit comprises:
an uplink parsing unit, configured to parse an uplink data block to obtain an extension bit of a TFI field from a BSN field of a block header of the uplink data block; and
a downlink parsing unit, configured to parse a downlink data block to obtain an extension bit of a TFI field and/or a USF field from a BSN field of a block header of the downlink data block.

15. The apparatus according to claim 13, wherein the parsing unit comprises:
a first determining unit, configured to determine, according to an EGPRS Window Size field in an assignment message of a network side, an actual working length used by the BSN field; and
a first reading unit, configured to determine a remaining length except the actual working length used by the BSN field as a length of the extension bit, and read, according to the determined length of the extension bit, the extension bit of the TFI field and/or the USF field from the BSN field of the block header of the data block.

16. A data transmission system, **characterized by** comprising a base station and a terminal, wherein the base station comprises a base station identifying apparatus and a base station recognizing apparatus, and the terminal comprises a terminal identifying apparatus and a terminal recognizing apparatus, wherein:
the base station identifying apparatus is configured to extend a TFI field or extend a TFI field and a USF field in a BSN field of a block header of a downlink data block, and send the downlink data block that comprises the extended field to the terminal;
the terminal identifying apparatus is configured to extend a TFI field in a BSN field of a block header of an uplink data block, and send the data block that comprises the extended field to the terminal, and receive the data block sent by the terminal;
the base station recognizing apparatus is configured to receive the uplink data block sent by the terminal, parse the uplink data block to obtain an extension bit of the TFI field from the BSN field of the block header of the uplink data block, and combine the extension bit that is obtained through parsing with data bits of the TFI field to obtain an extended TFI value; and
the terminal recognizing apparatus is configured to receive the downlink data block sent by the base station, parse the downlink data block to obtain an extension bit of the TFI field or obtain an extension bit of the TFI field and the USF field from the BSN field of the block header of the downlink data block, and combine the extension bit of the TFI field that is obtained through parsing with data bits of the TFI field, or combine the extension bit of the TFI field that is obtained through parsing with data bits of the TFI field and combine the extension bit of the USF field with data bits of the USF field to obtain an extended TFI value and an extended USF value.
